# EUROPÄISCHE PATENTSCHRIFT

(11) **EP 1 779 715 B1**
(45) Veröffentlichungstag und Bekanntmachung des Hinweises auf die Patenterteilung: **01.04.2009**
(21) Anmeldenummer: 06015299.8
(22) Anmeldetag: 22.07.2006
(51) Int. Cl.: A01D 57/20

(54) **Mähmaschine mit einer Schwadeinrichtung**
Mowing machine with a swathing device.
Faucheuse avec un dispositif d'andainage.

(30) Priorität: 26.10.2005 DE 102005051544
(43) Veröffentlichungstag der Anmeldung: 02.05.2007
(73) Patentinhaber: CLAAS Saulgau GmbH, 88348 Bad Saulgau (DE)
(72) Erfinder: Loebe, Stefan, 88348 Bad Saulgau (DE)
(74) Vertreter: Eisele, Otten, Roth & Dobler

(56) Entgegenhaltungen:
- EP-A- 0 296 666
- EP-A- 0 406 766
- EP-A- 0 672 336
- EP-A- 1 155 609
- DE-A1- 19 534 695
- US-A- 3 844 358

## Beschreibung

Um geschnittenes Erntegut unmittelbar mit dem Mähvorgang in einem Schwad abzulegen, sind bereits Mähvorrichtungen mit Schwadeinheiten bekannt geworden.

In der EP 1 155 609 B1 wird eine derartige Mähvorrichtung beschrieben, wobei die Schwadeinrichtung mittels eines Gelenks über einen vertikal beweglichen Rahmen schwenkbar ist. Dieser Stand der Technik betrifft ein gezogenes Mähgerät mit eigenem Fahrwerk, wobei die Schwenkbewegung der Schadeinrichtung so ausgebildet ist, dass sich die Baulänge des Mähgerätes nicht vergrößert, wobei dies insbesondere für den Fall vorgesehen wurde, dass das Mähgerät längs auf der Straße transportiert werden soll. Diese Vorrichtung nach dem Stand der Technik nimmt jedoch in Transportstellung eine beträchtliche Höhe ein, die insbesondere dann von Nachteil ist, wenn das Mähwerk selbst zum Transport in eine vertikale Stellung geschwenkt werden soll, da sich diese Höhe sodann wiederum bezüglich der Transportbreite nachteilig auswirkt.

Aufgabe der Erfindung ist es daher, eine Mähmaschine vorzuschlagen, bei der Transportbreite bei Verschwenkung des Mähwerks in Vertikalstellung verringert ist.

Dies wird erfindungsgemäß dadurch erreicht, dass der Schwenkwinkel der Schwadeinheit größer als 90° ausgebildet wird. Hierdurch ist es möglich, dass die Schwadeinheit, bezogen auf die Arbeitsstellung, so weit über das Mähwerk zu schwenken, dass sich die Gesamthöhe, die bei Vertikalposition des Mähwerks die quer zur Fahrtrichtung verlaufende Breite bildet, verringert. Auf diese Weise ist eine erfindungsgemäße Mähmaschine mit Schwadeinheit auch ohne eigenes Fahrwerk an einem Trägerfahrzeug einsetzbar, bei dem das Mähwerk für die Transportstellung in eine Vertikalposition verschwenkt wird.

Die gesamte Anordnung wird in der Transportstellung bei vertikaler Mähwerksposition mit zunehmendem Schwenkwinkel immer kompakter, so dass bevorzugt der Schwenkwinkel größer als 120°, insbesondere in etwa bei 160° gewählt wird.

In einer bevorzugten Ausführungsform umfasst die Schwadeinheit ein Schwadband zur Querförderung von Erntegut hinter dem Mähwerk während des Betriebs. Ein solches Schwadband ist bauartbedingt mit kompakteren Ausmaßen einsetzbar als andere Bauformen, beispielsweise Schwadkreisel.

Vorteilhafterweise wird das Schwadband an einem Schwenkrahmen befestigt, der an dem Rahmen des Mähwerks gegebenenfalls über eine Verbindungsstrebe oder dergleichen befestigt ist.

Ein solcher Schwenkrahmen ermöglicht die erfindungsgemäße Schwenkbewegung des Schwadbandes, wobei er die davor befindlichen Baukomponenten des Mähwerks außen umschließen kann, so dass der Schwenkrahmen bei dem Einklappen seitlich neben dazwischenliegenden Bereichen des Mähwerks vorbeifahren kann.

Die mit erfindungsgemäßem Schwenkwinkel einklappbare Schwadeinheit wird bevorzugt an einem in eine Vertikalstellung schwenkbaren Mähwerk eingesetzt, da in dieser Bauform die Vorteile der geringen Höhe in Arbeitsstellung, aus der sich eine geringe Breite in Transportstellung ergibt, durch den erhöhten Schwenkwinkel der Schwadeinheit besonders vorteilhaft genutzt werden.

Wird das Mähwerk zugleich beim Übergang in die Transportstellung in eine längs zur Fahrtrichtung befindliche Stellung gebracht, so kommt ein weiterer Vorteil des vergrößerten Schwenkwinkels zur Geltung. In diesem Fall wird nicht nur die Transportbreite der Mähmaschine durch den erfindungsgemäß vergrößerten Schwenkwinkel verringert, sondern zugleich die Höhe der Mähmaschine während des Transports.

Das Mähwerk einer erfindungsgemäßen Mähmaschine wird in einer bestimmten Ausführungsform an einem in eine Vertikalstellung schwenkbaren Ausleger befestigt. Dies ermöglicht den Einsatz einer erfindungsgemäßen Mähmaschine mit größerer Arbeitsbreite, beispielsweise hinter einem oder mehreren vorgeordneten Mähwerken mit kleinerer Gesamtbreite.

Um ein solches Mähwerk in Transportstellung längs zur Fahrtrichtung anzuordnen, wird das Mähwerk bevorzugt schwenkbar an dem Ausleger angebracht. Durch die Schwenkbewegung des Auslegers in die Vertikalstellung wird zugleich das Mähwerk in eine Vertikalstellung gebracht. Durch die drehbare Befestigung an dem Ausleger ist darüber hinaus eine Orientierung des Mähwerks in Fahrtrichtung erzielbar. Wie bereits oben erwähnt, kann in dieser Ausführungsform der große Schwenkwinkel der Schwadeinheit zur Verringerung der Transporthöhe der Mähmaschine beitragen.

In einer Weiterbildung der vorgenannten Ausführungsform wird der Ausleger teleskopierbar ausgebildet, so dass sich eine weitere Vergrößerung der Arbeitsbreite ergibt.

Ein Ausführungsbeispiel der Erfindung ist in der Zeichnung dargestellt und wird anhand der Figuren nachfolgend näher erläutert.

Im Einzelnen zeigen
- Figur 1: eine selbstfahrende Mähmaschine in perspektivischer Seitenansicht mit zwei erfindungsgemäßen Mähwerken mit Schwadeinheit in Transportstellung,
- Figur 1a: eine selbstfahrende Mähmaschine gemäß Figur 1 in der Frontansicht und die
- Figuren 2 bis 5: ein Mähwerk mit Schwadeinrichtung für eine erfindungsgemäße Mähmaschine in der Seitenansicht jeweils in unterschiedlicher Schwenkposition der Schwadeinheit.

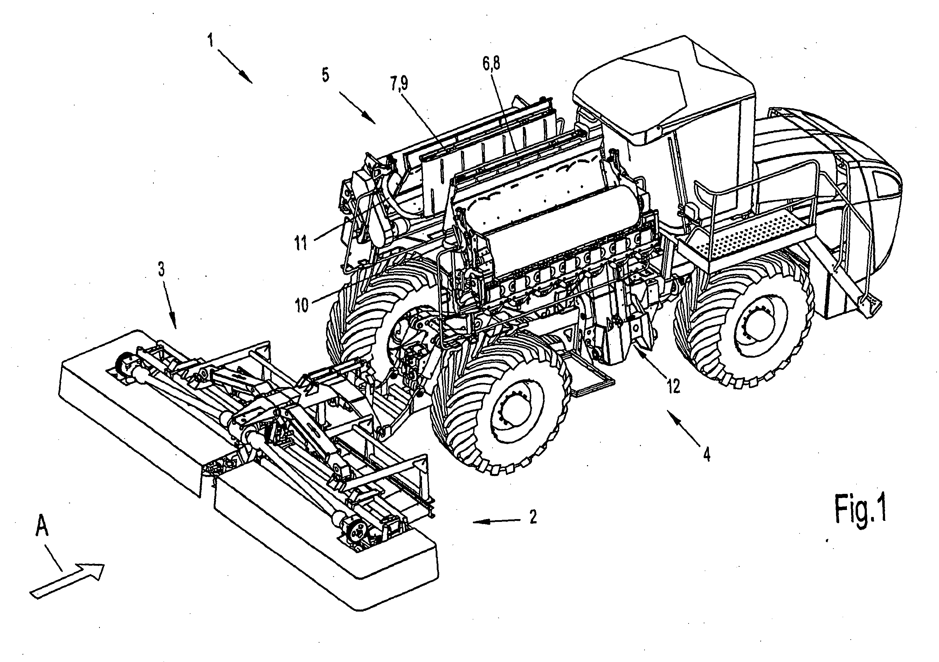

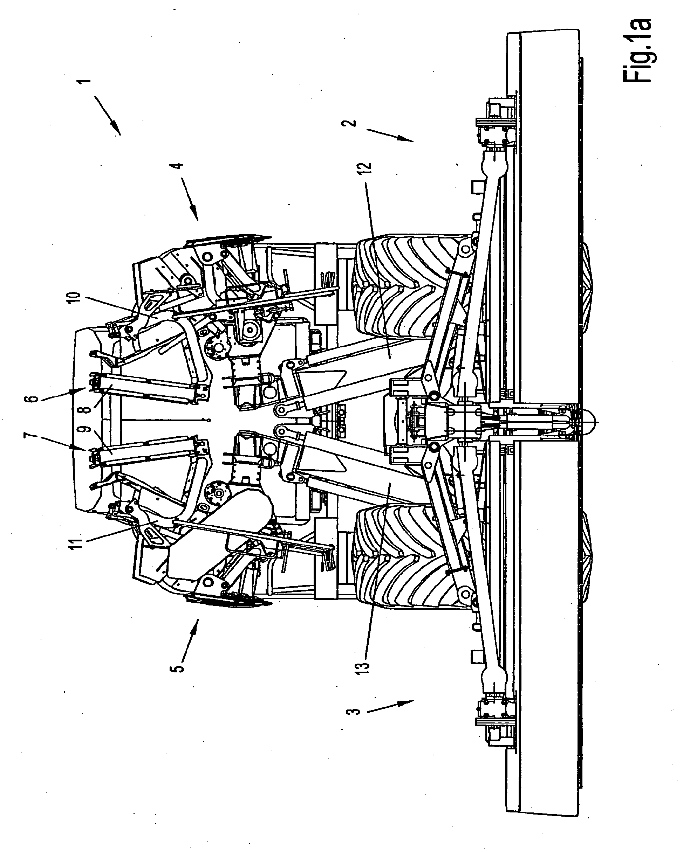

Die selbstfahrende Mähmaschine 1 gemäß den Figuren 1 und 1a umfasst zwei ausgeklappte Frontmähwerke 2, 3 sowie zwei in die Transportstellung eingezogene Seitenmähwerke 4, 5. Die Seitenmähwerke 4, 5 sind jeweils mit einer Schwadeinheit 6, 7 versehen. Die Schwadeinheiten 6, 7 umfassen Schwadbänder 8, 9, die über Schwenkrahmen 10, 11 an den Seitenmähwerken 4, 5 schwenkbar befestigt sind.

Die Seitenmähwerke 4, 5 sind an Teleskopauslegern 12, 13 drehbar befestigt, so dass sie in der dargestellten Transportposition längs zur Fahrtrichtung liegen und in der Arbeitsstellung ebenso wie die dargestellten Frontmähwerke 2, 3 quer zur Fahrtrichtung angeordnet werden können.

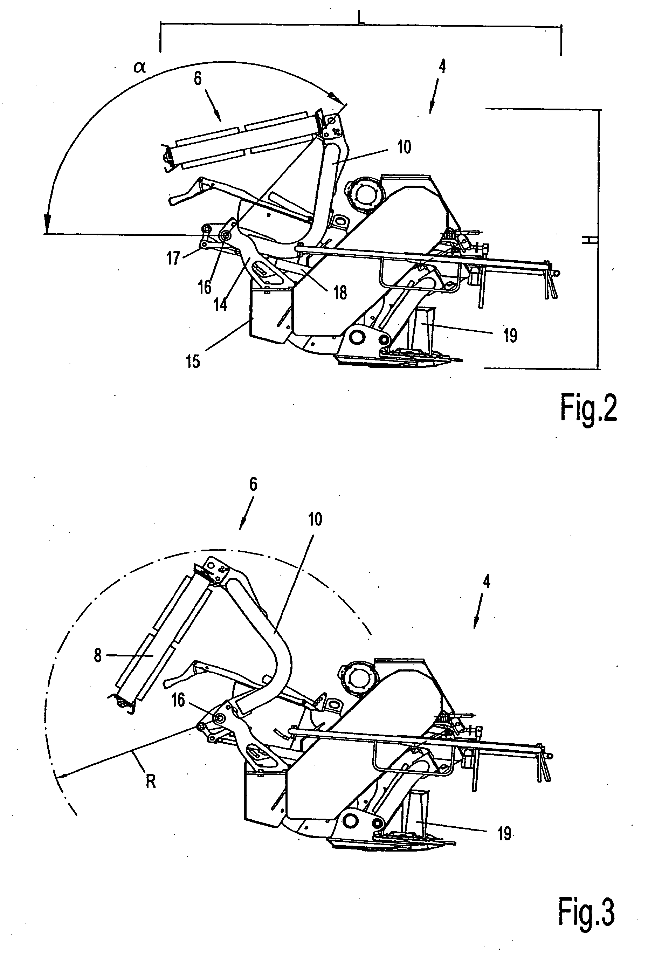

In Figur 2 ist ein Mähwerk in der Seitenansicht dargestellt, das beispielsweise das Seitenmähwerk 4 sein kann. Die Schwadeinheit 6 ist in Transportstellung hochgeschwenkt. Der Schwenkrahmen 10 ist hierzu über Streben 14 mit dem Rahmen 15 des Mähwerks 4 verbunden. Der Schwenkrahmen 10 ist dabei über die Drehachse 16 hinaus verlängert, wobei am äußeren Ende 17 ein Arbeitszylinder 18 angelenkt ist, mittels dem die Schwadeinheit 6 verschwenkt wird.

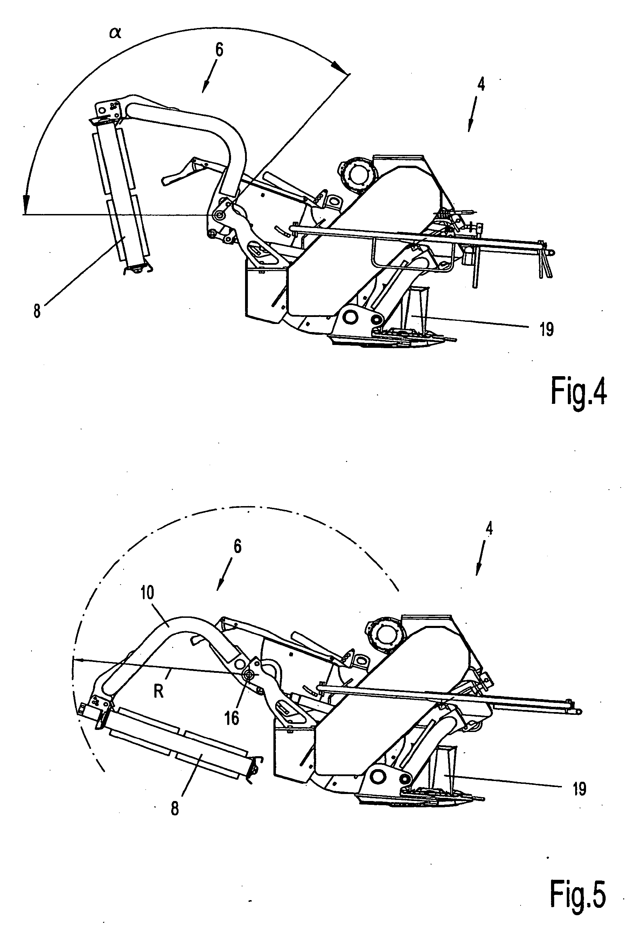

Die Figuren 2 und 5 zeigen die Endposition in der Transportstellung bzw. in der Arbeitsstellung der Schwadeinheit 6. Die Figuren 3 und 4 zeigen zwei Zwischenpositionen während der Schwenkbewegung.

Die Endposition gemäß Figur 2 entspricht dabei der in der Frontansicht gemäß Figur 1 dargestellten Position.

Die Endposition gemäß Figur 5 zeigt die Arbeitsstellung, in der das Schwadband 8 schräg mit einer kleinen Neigung hinter der Schneideinheit 19 angeordnet ist. Die Verbindungslinie zwischen dem Drehpunkt und der rückwärtigen Befestigung des Schwadbands 8 bildet dabei den maximalen Radius R, mit dem die Schwadeinheit 6 verschwenkt wird. Das von der Schneideinheit 19 ausgeworfene Erntegut landet auf dem Schwadband 8, das als umlaufendes Förderband ausgebildet ist. Auf dem Schwadband 8 wird das darauf abgeworfene Erntegut zur Seite hin gefördert und in einem Schwad abgelegt.

In den Figuren 2 und 5 ist der maximale Schwenkwinkel α eingezeichnet. Dieser Winkel α ist deutlich größer als 90°, er liegt in etwa bei 120°. Dieser gegenüber dem Stand der Technik vergrößerte Schwenkwinkel α sorgt dafür, dass die Gesamthöhe H des Mähwerks mit eingeklappter Schwadeinheit 6 deutlich geringer wird als dies bei kleineren Schwenkwinkeln, beispielsweise gemäß Figur 3, der Fall ist. Zugleich wird die Baulänge des Mähwerks L in eingeklapptem Zustand ebenfalls erheblich verkürzt.

Dies sorgt für deutlich günstigere Transportmaße, insbesondere dann, wenn das Mähwerk in eine vertikale Position verschwenkt wird, in der die Höhe H maßgeblich für die dann vorhandene Transportbreite der Maschine ist. Wird zusätzlich ein Mähwerk, wie das Mähwerk 4, in eine Vertikalstellung längs zur Fahrtrichtung angebracht, so stellt die Baulänge L ein Maß für die Transporthöhe dar. Diese Position ist bei einem Selbstfahrer gemäß Figur 1 zu erkennen.

Die Erfindung ist nicht auf das dargestellte Ausführungsbeispiel beschränkt. Wesentlich bei der Erfindung ist die Vergrößerung des Schwenkwinkels α einer an einem Mähwerk 4 schwenkbar befestigten Schwadeinheit 6, um die kompakten Transportmaße H, L zu erhalten.

### Bezugszeichenliste:

- 1: Mähmaschine
- 2: Frontmähwerk
- 3: Frontmähwerk
- 4: Seitenmähwerk
- 5: Seitenmähwerk
- 6: Schwadeinheit
- 7: Schwadeinheit
- 8: Schwadband
- 9: Schwadband
- 10: Schwenkrahmen
- 11: Schwenkrahmen
- 12: Teleskopausleger
- 13: Teleskopausleger
- 14: Strebe
- 15: Rahmen
- 16: Drehachse
- 17: Ende
- 18: Arbeitszylinder
- 19: Schneideinheit
- R: Radius
- α: Schwenkwinkel
- H: Gesamthöhe
- L: Baulänge

## Patentansprüche

1. Mähmaschine mit einem Mähwerk (4, 5) mit einer, bezogen auf die Arbeitsstellung in Fahrtrichtung hinten angeordneten Schwadeinheit (6, 7), die um eine, bezogen auf die Arbeitsstellung quer zur Fahrtrichtung liegende Achse nach oben verschwenkbar ist, **dadurch gekennzeichnet, dass** der Schwenkwinkel der Schwadeinheit (6, 7) größer als 90° ist.

2. Mähmaschine nach Anspruch 1 **dadurch gekennzeichnet, dass** der Schwenkwinkel größer als 120° ist.

3. Mähmaschine nach einem der vorgenannten Ansprüche **dadurch gekennzeichnet, dass** der Schwenkwinkel α in etwa 160° beträgt.

4. Mähmaschine nach einem der vorgenannten Ansprüche **dadurch gekennzeichnet, dass** die Schwadeinheit (6, 7) ein Schwadband (8, 9) umfasst.

5. Mähmaschine nach einem der vorgenannten Ansprüche **dadurch gekennzeichnet, dass** die Schwadeinheit (6, 7) an einem Schwenkrahmen (10, 11) befestigt ist, der gelenkig an einem Rahmen (15) des Mähwerks (1) angebracht ist.

6. Mähmaschine nach einem der vorgenannten Ansprüche **dadurch gekennzeichnet, dass** das Mähwerk in eine Vertikalstellung schwenkbar ist.

7. Mähmaschine nach einem der vorgenannten Ansprüche **dadurch gekennzeichnet, dass** das Mähwerk in Arbeitsposition quer und in Transportstellung längs zur Fahrtrichtung angeordnet ist.

8. Mähmaschine nach einem der vorgenannten Ansprüche **dadurch gekennzeichnet, dass** das Mähwerk an einem in eine Vertikalstellung schwenkbaren Ausleger befestigt ist.

9. Mähmaschine nach einem der vorgenannten Ansprüche **dadurch gekennzeichnet, dass** das Mähwerk schwenkbar an dem Ausleger befestigt ist.

10. Mähmaschine nach einem der vorgenannten Ansprüche **dadurch gekennzeichnet, dass** der Ausleger teleskopierbar ist.

11. Mähmaschine nach einem der vorgenannten Ansprüche **dadurch gekennzeichnet, dass** sie als Anbaugerät zum Anbau an ein Trägerfahrzeug ausgebildet ist.

12. Mähmaschine nach einem der vorgenannten Ansprüche **dadurch gekennzeichnet, dass** sie als Selbstfahrer ausgebildet ist.

## Claims

1. Mowing machine with a mower (4, 5) with a swathing unit (6, 7) arranged to the rear In relation to the operating position in travelling direction, which swathing unit can be pivoted upwards about an axis lying at right angles to the travelling direction with respect to the operating position, **characterised in that** the pivot angle of the swathing unit (6, 7) is greater than 90'.

2. Mowing machine according to claim 1, **characterised in that** the pivot angle is greater than 120°.

3. Mowing machine according to one of the preceding claims, **characterised in that** the pivot angle α is about 160°.

4. Mowing machine according to one of the preceding claims, **characterised in that** the swathing unit (6, 7) comprises a swathing strip (8, 9).

5. Mowing machine according to one of the preceding claims, **characterised in that** the swathing unit (6, 7) is secured onto a pivot frame (10, 11 which is attached by hinge onto a frame (15) of the mower (1).

6. Mowing machine according to one of the preceding claims, **characterised in that** the mower can be pivoted into a vertical position.

7. Mowing machine according to one of the preceding claims, **characterised in that** mower is arranged in operating position at right angles to the travelling direction and in transport position longitudinally to the travelling direction.

8. Mowing machine according to one of the preceding claims, **characterised in that** the mower is secured onto a cross-arm which can be pivoted into a vertical position.

9. Mowing machine according to one of the preceding claims, **characterised in that** the mower is secured pivotably onto the cross-arm.

10. Mowing machine according to one of the preceding claims, **characterised in that** the cross-arm is telescopic.

11. Mowing machine according to one of the preceding claims, **characterised in that** it is designed as an attachment device for attaching to a support vehicle.

12. Mowing machine according to one of the preceding claims, **characterised in that** it is designed in the form of self-propelled vehicle.

## Revendications

1. Faucheuse comportant un mécanisme de fauchage (4, 5) avec une unité d'andainage (6, 7) agencée derrière dans le sens de la marche, rapporté à la position de travail, laquelle unité d'andainage peut être pivotée vers le haut autour d'un axe situé transversalement au sens de la marche, rapporté à la position de travail,
**caractérisée en ce que** l'angle de pivotement de l'unité d'andainage (6, 7) est supérieur à 90°.

2. Faucheuse selon la revendication 1,
**caractérisée en ce que** l'angle de pivotement est supérieur à 120°.

3. Faucheuse selon l'une des revendications précédentes,
**caractérisée en ce que** l'angle de pivotement α est égal à environ 160°.

4. Faucheuse selon l'une des revendications précédentes,
**caractérisée en ce que** l'unité d'andainage (6, 7) comporte une bande d'andainage (8, 9).

5. Faucheuse selon l'une des revendications précédentes,
**caractérisée en ce que** l'unité d'andainage (6, 7) est fixée sur un cadre pivotant (10, 11) qui est monté de façon articulée sur un cadre (15) du mécanisme de fauchage (1).

6. Faucheuse selon l'une des revendications précédentes,
**caractérisée en ce que** le mécanisme de fauchage peut être pivoté dans une position verticale.

7. Faucheuse selon l'une des revendications précédentes,
**caractérisée en ce que** le mécanisme de fauchage est agencé transversalement au sens de la marche dans la position de travail et longitudinalement au sens de la marche dans la position de transport.

8. Faucheuse selon l'une des revendications précédentes,
**caractérisée en ce que** le mécanisme de fauchage est fixé sur un bras qui peut être pivoté dans une position verticale.

9. Faucheuse selon l'une des revendications précédentes,
**caractérisée en ce que** le mécanisme de fauchage est fixé de façon à pouvoir pivoter sur le bras.

10. Faucheuse selon l'une des revendications précédentes,
**caractérisée en ce que** le bras est télescopique.

11. Faucheuse selon l'une des revendications précédentes,
**caractérisée en ce qu'**elle est réalisée sous forme d'accessoire porté à monter sur un véhicule porteur.

12. Faucheuse selon l'une des revendications précédentes,
**caractérisée en ce qu'**elle est réalisée automotrice.
